# EUROPEAN PATENT SPECIFICATION

(11) **EP 2 100 136 B1**
(45) Date of publication and mention of the grant of the patent: **20.04.2011**
(21) Application number: 07852125.9
(22) Date of filing: 18.12.2007
(51) Int. Cl.: G01N 30/56, B01D 15/08, B01D 15/20, G01N 30/50

(54) **TANK FOR SUSPENDING SEPARATION MEDIA SLURRY**
BEHÄLTER ZUM AUFLÖSEN VON SEPARATIONSMEDIEN
CUVE POUR LA SUSPENSION D'UN MILIEU DE GARNISSAGE CHROMATOGRAPHIQUE

(30) Priority: 02.01.2007 SE 0700014
(43) Date of publication of application: 16.09.2009
(73) Proprietor: GE Healthcare Bio-Sciences AB, 75184 Uppsala (SE)
(72) Inventor: ASPLUND, Magnus, S-751 84 Uppsala (SE); HJORTH, Rolf, S-751 84 Uppsala (SE)
(74) Representative: Stavbom, Ellen Elisabet
(86) International application number: PCT/SE2007/001125
(87) International publication number: WO 2008/082339

(56) References cited:
- EP-A2- 0 515 955
- WO-A1-02/10739
- WO-A1-93/13937
- WO-A1-99/64130
- DE-A1- 10 137 613
- DATABASE WPI Week 199252, Derwent Publications Ltd., London, GB; AN 1992-428044, XP008106233 & JP 04 323557 A (HITACHI PLANT ENG & CONSTR CO) 12 November 1992

## Description

### TECHNICAL FIELD OF THE INVENTION

The present invention relates to a method and a tank for suspending separation media slurry according to the preambles of claim 1, 3 and 7.

### BACKGROUND OF THE INVENTION

Separation media could be for example chromatography media and density gradient media. The media could be for example resins based on natural or synthetic polymer particles or inorganic material. For chromatography the separation media needs to be provided into a chromatography column. For the transportation of the separation media into for example a column the media needs first to be suspended into an homogenous media slurry mixture. The separation media is normally suspended with a liquid, for example water, buffer or a solvent. This suspended media is usually called media slurry. When a column should be filled with media slurry from a storage container, an intermediate tank is used where the slurry is mixed into a homogenous mixture. The media slurry is often stirred manually in the tank and it is important that the media slurry becomes a homogenous mixture regarding the distribution of different sizes of particles in the media. Of course it is not convenient to stir manually especially when there is a large amount of media slurry to be stirred. It could also take quite a long time to fill the column with the media slurry and the media slurry needs to be stirred the whole time. Another way to mix the slurry that is sometimes used is to shake or tilt the tank back and forth. This could be advantageous for small tanks and small volumes of slurry but is hard to perform and not suitable for big, heavy tanks.

Solutions have been proposed, for example in EP0515955 or JP4323557, where permanent, electrical stirrers, also called impellers are used. There are however different problems associated with these kind of impellers. If the impeller is not running the whole time when the media slurry is inside the tank the slurry will sediment and then it will be hard to start the impeller in the sedimented media. This requires furthermore an oversized engine. When starting the impeller in sedimented media the media particles can be damaged because of shear forces provided by the impeller. It could be preferable to not run the impeller the whole time in order to minimize possible damage to the particles caused by the impeller.

DE10137613 discloses a further prior art solution in which a chromatographic separation column assembly contains a series of granular layers laid down by an assembly. The assembly comprises a column installation handling unit, a holding container, a charge container with closure, a pump and a pressure regulator. The column is in a fluidic connection with a charge tank and a chromatography separation media. The separation bed material forms a homogenous granular layer in the column above the coherent surface. WO02/10739 discloses another solution in which a packing pump is used to pack the column. W09313937 discloses a process for making cellulose chromatographic supports.

### SUMMARY

An object of the present invention is to provide an improved method and tank for suspending separation media slurry before transportation of said media slurry into for example a column where particles in said media are not damaged.

This is achieved in a method according to claim 1 and in a tank according to claim 3 and in a tank system according to claim 7.

Hereby the impeller does not need to start in a thick, sedimented media with the risk of damaging particles in the media and the impeller does not need to be running the whole time when the separation media is inside the tank. The spraying of liquid by the nozzle starts the re-suspension of the media from the bottom of the tank and the impeller can be started when the media has been sufficiently re-suspended. Furthermore liquid from the liquid phase of the media slurry having started to sediment is used for the spraying by the nozzle and hereby no new liquid need to be added and hereby the slurry concentration can be kept constant.

Further suitable embodiments are described in the dependent claims.

### BRIEF DESCRIPTION OF THE DRAWINGS

Figure 1 is a schematic view of a separation media slurry tank according to the invention.
Figure 2 is a flow chart describing the steps of the method.

### DETAILED DESCRIPTION OF EMBODIMENTS

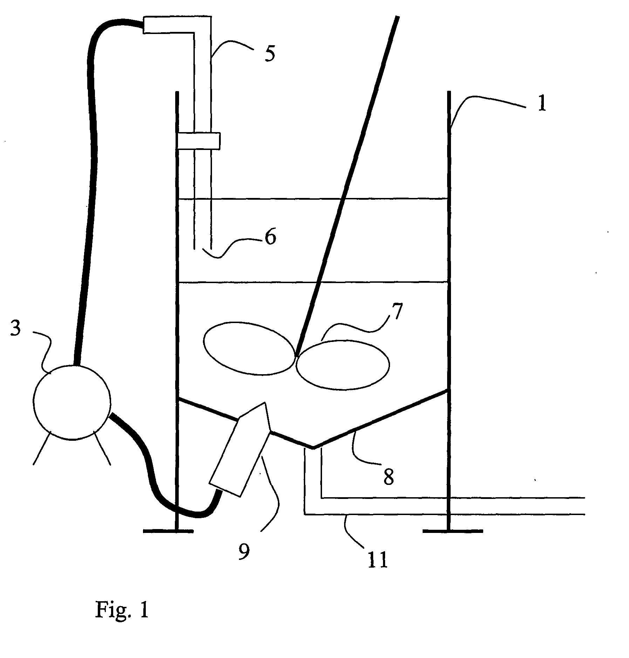

Figure 1 is a schematic view of a separation media slurry tank 1 according to the invention. If media is to be fed to a column from a media storage container the media is first transferred from the storage container to a media tank according to the invention. This could be done by connecting a tube from the storage container to a pump 3 provided in connection with the media slurry tank. Said pump is further connected to an adjustable pipe 5 that has an open end 6 provided inside the tank 1. Said adjustable pipe 5 is further described below. Hereby the media slurry can be pumped from the media storage container to the tank. Alternatively the media could be transferred from the storage container to the tank using another pump and some other tubes or pipes.

When the media has been transferred to the tank it immediately starts to sediment. An impeller 7 that is provided inside the tank can be started from the beginning and keep on stirring the media slurry the whole time until the media has been transferred to a column where it should be used for, for example chromatography, but according to the invention, as will be further described below, the impeller does not need to be ongoing the whole time. The impeller 7 is preferably designed as a coil in the height direction of the tank, this kind of impeller is also called a helical ribbon. Other designs such as a two- or three-bladed propeller or an impeller formed as an anchor are however also possible. In Figure 1 a two-bladed propeller 7 is shown. Furthermore the impeller is suitably provided with its lowest end close to the bottom 8 of the tank.

According to the invention a nozzle 9 is furthermore provided protruding into the tank from the bottom 8 of the tank. This nozzle is connected to the pump 3, which in turn is connected to the adjustable pipe 5 as described above. The adjustable pipe 5 can be adjusted to have its open end 6 in a liquid phase provided above the sedimented media as soon as the media slurry is starting to sediment. According to the invention the pump 3 pumps liquid from the liquid phase, through the adjustable pipe 5 and further to the nozzle 9. The pump applies a pressure to the liquid in the nozzle and the nozzle is designed such that the liquid is introduced with some speed, such as spraying, into the sedimented media from the bottom 8 of the tank. This has the advantage that the sedimented media in the tank will start to re-suspend. Preferably the impeller is not started until the sedimented media has been sufficiently re-suspended by the spraying from the nozzle. Hereby it will be easier to start the impeller than it would have been if the impeller would have to start inside thick, sedimented media and the risk for damaging particles of the media is minimized. Furthermore the use of the liquid from the liquid phase of the sedimented media slurry for the spraying by the nozzle implies that no extra liquid need to be provided and the media slurry concentration can be kept constant.

When the media slurry has been stirred and mixed enough it can be transferred to a column through a pipe 11 from the bottom of the tank 1.

The tank according to the invention can also be used when transferring media from a column to a storage container. It could be suitable to first transfer the media to the tank, suspend the media sufficiently according to what was previously described and then transfer the media slurry to the storage container.

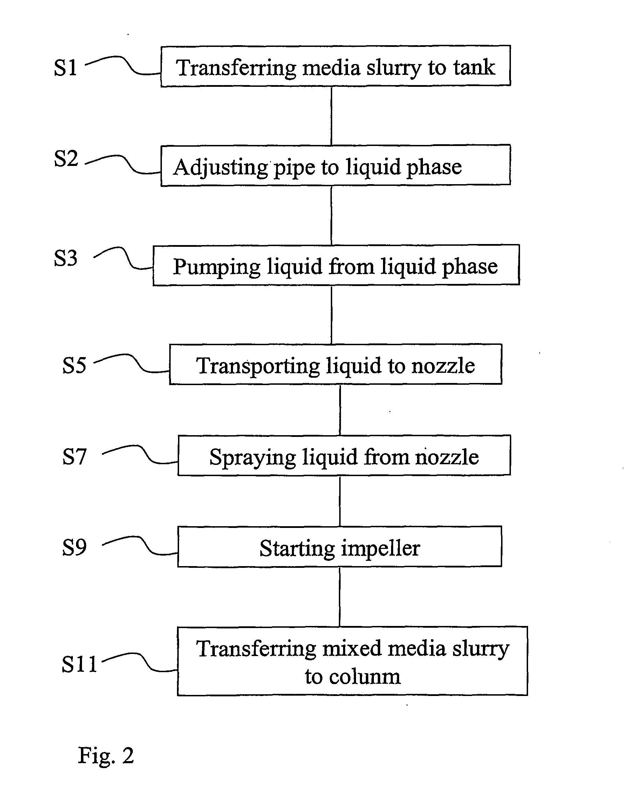

The method according to one embodiment of the invention where media slurry is transferred from a storage container to a column via the tank will now be further described with reference to the flowchart in Figure 2. The steps are described in order below.

S1: Media slurry is first transferred from the storage container to the tank according to the invention. This could be done by using a pump and a tube or pipe. Possibly a pump 3 connected to the tank and the adjustable pipe 5 of the tank can be used for this transferring of media slurry from the storage container to the tank. As soon as the media slurry has entered the tank it starts to sediment - actually it is already sedimented to some degree since no stirring has been performed in the storage container, i.e. media will sediment at the bottom 8 of the tank and a liquid phase (possibly containing some particles also) will be built up over the sedimented media.

The method steps S2-S11 need not to be performed immediately after transferring of the media slurry to the tank. But when it is time for the transferring of the media slurry to the column the media slurry needs to be mixed into an homogenous media slurry and then the steps 52-S l will be performed.
S2: The adjustable pipe 5 is adjusted such that its open end 6 is in the liquid phase in the tank.
S3: The next step is to pump liquid from the liquid phase through the adjustable pipe 5 by using the pump 3.
S5: The liquid is then transported through the pump 3 to the nozzle 9.
S7: By applying a pressure to the nozzle 9 from the pump 3 the liquid is sprayed out from the nozzle 9 from the bottom (8) of the tank into the sedimented media.
S9: When the sedimented media close to the bottom 8 of the tank has been sufficiently re-suspended the impeller 7 is started. The impeller 7 is driven until a homogenous mixture of the media slurry is achieved.
S 11: When the media slurry is sufficiently mixed it is transferred to the column.

If the method according to the invention should be applied for the invert transferring of media slurry, i.e. from column to storage container the same steps S1-S11 are followed with the only change that the storage container replaces the column and the column replaces the storage container.

## Claims

1. A method for suspending separation media slurry in a tank, before transferring the separation media slurry to a column or a container, **characterised by** the steps of:
- pumping liquid from an uppermost liquid phase being formed in the tank when the media slurry is sedimenting, said liquid possibly containing a small amount of media but is hereafter being called liquid;
- transferring said liquid to a nozzle (9) protruding into said tank from the bottom (8) of the tank;
- applying a pressure to said nozzle (9) such that said liquid is sprayed out from the nozzle (9) into the sedimented media in the tank and thereby the sedimented media starts to re-suspend;
- starting an impeller (7) provided in the tank in order to stir said media slurry that already has started to re-suspend.

2. A method according to claim 1, **characterised by** adjusting the height of an open end (6) of an adjustable pipe (5) provided inside the tank, the height being adjusted to the liquid phase of the media slurry having started to sediment, said adjustable pipe (5) being connected to said nozzle (9) through a pump (3).

3. A tank adapted to be used for suspending separation media slurry before transferring the separation media slurry to a column or a container, said tank comprising:
- an impeller (7) adapted to rotate in order to mix the media slurry,
**characterised in that** said tank further comprises
- a nozzle (9) provided protruding into the tank from the bottom (8) of the tank, and
- an adjustable pipe (5) having an open end (6) positioned in the tank, said open end being possible to adjust in position, said nozzle (9) and said adjustable pipe (5) being adapted to be connected to a pump (3) which is adapted to pump liquid from the adjustable pipe (5) when said open end (6) of the adjustable pipe (5) has been positioned in an uppermost liquid phase provided in the tank when the media slurry has started to sediment and pump said liquid, possibly containing a small amount of media but hereafter being called liquid, through said nozzle (9) back into the tank from the bottom (8) of the tank in order to start to re-suspend media that has sedimented in the tank.

4. A tank according to claim 3, **characterised in that** said impeller (7) is adapted to start after the sedimented media has started to re-suspend by the introducing of the liquid from the nozzle.

5. A tank according to claim 3 or 4, **characterised in that** the impeller (7) is provided close to the bottom (8) of the tank.

6. A tank according to any one of the claims 3-5, **characterised in that** the impeller (7) is designed as a coil in the height direction of the tank.

7. A tank system comprising a tank according to any one of the claims 3-6 and a pump (3) connected to the adjustable pipe (5) and to the nozzle (9).

## Patentansprüche

1. Verfahren zum Suspendieren einer Trennmedienaufschlämmung in einem Tank, vor dem Weiterleiten der Trennmedienaufschlämmung zu einer Säule oder einem Behälter, **gekennzeichnet durch** die Schritte:
- Pumpen von Flüssigkeit aus einer obersten flüssigen Phase, die sich im Tank bildet, wenn die Medienaufschlämmung Sedimentation erfährt, wobei die Flüssigkeit möglicherweise eine geringe Menge an Medien enthält, jedoch nachstehend als flüssig bezeichnet wird;
- Weiterleiten der Flüssigkeit zu einer Düse (9), die aus dem Boden (8) des Tanks in den Tank hineinragt;
- Beaufschlagen der Düse (9) mit Druck, so dass die Flüssigkeit aus der Düse (9) in die sedimentierten Medien im Tank gesprüht wird und **dadurch** die sedimentierten Medien beginnen, sich erneut zu suspendieren;
- Starten eines im Tank vorgesehenen Impellers (7), um die Medienaufschlämmung zu rühren, die bereits begonnen hat, sich erneut zu suspendieren.

2. Verfahren nach Anspruch 1, **gekennzeichnet durch** das Einstellen der Höhe eines offenen Endes (6) eines einstellbaren Rohrs (5), das im Innern des Tanks vorgesehen ist, wobei die Höhe eingestellt wird auf die flüssige Phase der Medienaufschlämmung, bei der Sedimentation eingesetzt hat, wobei das einstellbare Rohr (5) **durch** eine Pumpe (3) an die Düse (9) angeschlossen ist.

3. Tank, der ausgelegt ist zwecks Verwendung zum Suspendieren einer Trennmedienaufschlämmung vor Weiterleitung der Trennmedienaufschlämmung zu einer Säule oder einem Behälter, wobei der Tank umfasst:
- einen Impeller (7), der rotierbar ist, um die Medienaufschlämmung zu mischen,
**dadurch gekennzeichnet, dass** der Tank weiterhin umfasst
- eine Düse (9), die so vorgesehen ist, dass sie aus dem Boden (8) des Tanks in den Tank hineinragt, und
- ein einstellbares Rohr (5) mit einem offenen Ende (6), das im Tank positioniert ist, wobei es möglich ist, die Position des offenen Endes einzustellen, wobei sich die Düse (9) und das einstellbare Rohr (5) zum Anschluss an eine Pumpe (3) eignen, die ausgelegt ist, um Flüssigkeit aus dem einstellbaren Rohr (5) zu pumpen, wenn das offene Ende (6) des einstellbaren Rohrs (5) in einer obersten flüssigen Phase positioniert worden ist, die im Tank bereitsteht, wenn bei der Medienaufschlämmung Sedimentation eingesetzt hat, und um die Flüssigkeit, die möglicherweise eine geringe Menge an Medien enthält, jedoch nachstehend als flüssig bezeichnet wird, vom Boden (8) des Tanks aus durch die Düse (9) zurück in den Tank zu pumpen, um mit dem erneuten Suspendieren von Medien zu beginnen, die sich im Tank sedimentiert haben.

4. Tank nach Anspruch 3, **dadurch gekennzeichnet, dass** der Impeller (7) ausgelegt ist, um zu starten, nachdem die sedimentierten Medien durch das Einbringen der Flüssigkeit aus der Düse begonnen haben, sich erneut zu suspendieren.

5. Tank nach Anspruch 3 oder 4, **dadurch gekennzeichnet, dass** der Impeller (7) nahe dem Boden (8) des Tanks vorgesehen ist.

6. Tank nach einem der Ansprüche 3 bis 5, **dadurch gekennzeichnet, dass** der Impeller (7) als Spirale bzw. Wendel in der Höhenrichtung des Tanks ausgebildet ist.

7. Tanksystem, umfassend einen Tank nach einem der Ansprüche 3 bis 6 und eine Pumpe (3), die an das einstellbare Rohr (5) und an die Düse (9) angeschlossen ist.

## Revendications

1. Procédé de mise en suspension d'un milieu de séparation en pâte dans un réservoir, avant de transférer le milieu de séparation en pâte vers une colonne ou un conteneur, **caractérisé par** les étapes de :
- pompage de liquide à partir d'une phase liquide supérieure qui est formée dans le réservoir lorsque le milieu en pâte sédimente, ledit liquide contenant éventuellement une faible quantité de milieu mais étant appelé ci-après un liquide ;
- transfert dudit liquide vers un injecteur (9) s'étendant dans ledit réservoir à partir du fond (8) du réservoir ;
- application d'une pression sur ledit injecteur (9) de telle sorte que ledit liquide est pulvérisé par l'injecteur (9) dans le milieu sédimenté dans le réservoir et ainsi, le milieu sédimenté commence à se remettre en suspension ;
- démarrage d'un agitateur (7) agencé dans le réservoir dans le but d'agiter ledit de milieu en pâte qui a déjà commencé à se remettre en suspension.

2. Procédé selon la revendication 1, **caractérisé par** l'ajustement de la hauteur d'une extrémité ouverte (6) d'une tuyauterie réglable (5) agencée à l'intérieur du réservoir, la hauteur étant ajustée à la phase liquide du milieu en pâte qui a commencé à sédimenter, ladite tuyauterie réglable (5) étant reliée audit injecteur (9) par l'intermédiaire d'une pompe (3).

3. Réservoir adapté de manière à être utilisé pour mettre en suspension un milieu de séparation en pâte avant de transférer le milieu de séparation en pâte dans une colonne ou un conteneur, ledit réservoir comprenant :
- un agitateur (7) adapté afin de tourner dans le but de mélanger le milieu en pâte,
**caractérisé en ce que** ledit réservoir comprend, en outre :
- un injecteur (9) agencé en saillie dans le réservoir à partir du fond (8) du réservoir, et
- une tuyauterie réglable (5) présentant une extrémité ouverte (6) positionnée dans le réservoir, ladite extrémité ouverte pouvant être ajustée en position, ledit injecteur (9) et ladite tuyauterie réglable (5) étant adaptés de manière à être couplés à une pompe (3) qui est adaptée afin de pomper un liquide à partir de la tuyauterie réglable (5) lorsque ladite extrémité ouverte (6) de la tuyauterie réglable (5) a été positionnée dans la phase liquide supérieure formée dans le réservoir lorsque le milieu en pâte a commencé à sédimenter et pompe ledit liquide, contenant éventuellement une faible quantité de milieu mais étant appelé ci-après un liquide, à travers ledit injecteur (9) afin de le renvoyer dans le réservoir à partir du fond (8) dans le but de commencer à remettre en suspension le milieu qui a sédimenté dans le réservoir.

4. Réservoir selon la revendication 3, **caractérisé en ce que** ledit agitateur (7) est adapté afin de démarrer après que le milieu sédimenté à commencé à être remis en suspension par l'introduction du liquide à partir de l'injecteur.

5. Réservoir selon la revendication 3 ou 4, **caractérisé en ce que** l'agitateur (7) est agencé à proximité du fond (8) du réservoir.

6. Réservoir selon l'une quelconque des revendications 3 à 5, **caractérisé en ce que** l'agitateur (7) est conçu comme une hélice dans le sens de la hauteur du réservoir.

7. Ensemble de réservoir comprenant un réservoir selon l'une quelconque des revendications 3 à 6, et une pompe (3) raccordée à la tuyauterie réglable (5) et à l'injecteur (9).
